(19) **Europäisches Patentamt**

**European Patent Office**

**Office européen des brevets**

(11) **EP 0 892 215 B1**

(12) **EUROPÄISCHE PATENTSCHRIFT**

(45) Veröffentlichungstag und Bekanntmachung des Hinweises auf die Patenterteilung:
**20.11.2002 Patentblatt 2002/47**

(51) Int Cl.[7]: **F23N 5/24**, B60H 1/22

(21) Anmeldenummer: **98113362.2**

(22) Anmeldetag: **17.07.1998**

(54) **Verfahren zum Steuern eines Überhitzungsschutzes für ein Heizgerät**

Method for controlling the overheat protection for a heater

Procédé de commande de la protection de surchauffe pour un appareil de chauffage

(84) Benannte Vertragsstaaten:
**DE FR GB SE**

(30) Priorität: **18.07.1997 DE 19730824**
**18.08.1997 DE 19735634**

(43) Veröffentlichungstag der Anmeldung:
**20.01.1999 Patentblatt 1999/03**

(73) Patentinhaber: **WEBASTO THERMOSYSTEME GmbH**
**D-82131 Stockdorf (DE)**

(72) Erfinder:
• **Galtz, Rüdiger**
**82166 Gräfelfing (DE)**

• **Widemann, Fritz**
**81241 München (DE)**
• **Bittmann, Michael**
**80999 München (DE)**

(74) Vertreter: **Wiese, Gerhard**
**Wiese & Konnerth**
**Georgenstrasse 6**
**82152 Planegg (DE)**

(56) Entgegenhaltungen:
**EP-A- 0 548 655        WO-A-86/05861**

• **PATENT ABSTRACTS OF JAPAN vol. 018, no. 475 (E-1601), 5. September 1994 (1994-09-05) & JP 06 163144 A (MATSUSHITA ELECTRIC IND CO LTD), 10. Juni 1994 (1994-06-10)**

**Beschreibung**

Die Erfindung betrifft ein Verfahren zum Steuern eines Überhitzungsschutzes für ein Heizgerät, insbesondere ein Fahrzeug-Zusatzheizgerät, gemäß dem Oberbegriff des Patentanspruchs 1.

Ein nach einem derartigen Verfahren arbeitender Überhitzungsschutz für ein Fahrzeug-Zusatzheizgerät ist aus der DE 44 46 829 A1 bekannt. Dort sind verschiedene Varianten beschrieben, mittels einem oder mehreren Temperaturfühlern eine Ist-Temperatur, eine Temperatur-Differenz oder einen Temperatur-Gradienten zu ermitteln und in einem Steuergerät mit einer Schaltschwelle zu vergleichen.

Als Überhitzungssensor bei dem in Rede stehenden Verfahren gelangt üblicherweise ein analoger Sensor mit PTC- oder NTC-Charakteristik gegebenenfalls mit einstellbarer und/oder abfragbarer Schalttemperaturschwelle zum Einsatz. Üblicherweise ist die einzige für den Überhitzungsschutz vorgesehene Schalttemperaturschwelle auf eine Heizleistung ausgelegt, die an der Maximalheizgrenze liegt, so daß eine optimale Ausnutzung der temperaturabhängigen Materialeigenschaften bzw. kundenspezifische Anforderungen und sicherheitsrelevanter Gesetzesvorschriften nicht oder zumindest nicht optimal erreicht wird. Vor allem werden einerseits Leistungsreserven nicht voll ausgenutzt und andererseits bestimmte Betriebszustände nicht genügend abgesichert.

Angesichts dieses Standes der Technik liegt der vorliegenden Erfindung die primäre Aufgabe zugrunde, ein Verfahren zum Steuern eines Überhitzungsschutzes der im Oberbegriff des Anspruchs 1 genannten Art zu schaffen, das bei Gewährleistung einer hohen Sicherheit für das Heizgerät eine optimale Ausnutzung temperaturabhängiger Materialeigenschaften von Komponenten des Heizgeräts gewährleistet.

Gelöst wird diese Aufgabe durch die Merkmale des Anspruchs 1. Vorteilhafte Weiterbildungen der Erfindung sind in den Unteransprüchen angegeben.

Mit anderen Worten sieht das erfindungsgemäße Verfahren einen Überhitzungsschutz für das Heizgerät vor, der optimal an die aktuelle Heizleistung angepaßt ist, indem in Abhängigkeit von der Heizleistung mehrere Schalttemperaturschwellen vorgesehen sind, um den Überhitzungsschutz zu aktivieren. Die Schalttemperaturschwellen können dabei grundsätzlich so dicht vorgesehen sein, daß jedem Heizleistungszustand derart Rechnung getragen wird, daß zum einen eine optimale Ausnutzung der temperaturabhängigen Materialeigenschaften von Heizgeräte-Komponenten gewährleistet ist und andererseits kundenspezifischen Anforderungen, sicherheitsrelevanten Gesetzesvorschriften und dergleichen Rechnung getragen wird. Ein besonders wesentlicher Aspekt der Erfindung besteht darin, daß aufgrund der flexibel an die Heizleistung angepaßten Schalttemperaturschwellen bzw. der Nachführung der Schalttemperaturschwellen entsprechend der Heizleistung Leistungsreserven des Heizgeräts vollständig ausgenutzt werden können, wobei gleichzeitig stets sichergestellt ist, daß alle Betriebszustände optimal abgesichert sind.

Erfindungsgemäß sind demnach im Steuergerät von der aktuellen Heizleistung abhängige Schalttemperaturschwellen definiert, auf deren Grundlage das Heizgerät abgeschaltet, beispielsweise die Brennstoff-Förderung unterbrochen und insbesondere bei einer durch einen Zähler festgestellten wiederholten Störabschaltung der weitere Betrieb unter Absetzung einer Störungsmeldung gegebenenfalls verriegelt wird. Der Kundennutzen für das nach dem erfindungsgemäßen Verfahren arbeitende Heizgerät wird dadurch erhöht, daß das Heizgerät nur im Ausnahmefall, bei einer tatsächlichen Störung in die Verriegelung geht und eine Störmeldung absetzt, da es einen optimal auf den jeweiligen Lastpunkt abgestimmtes Auslöseverhalten hat.

Die bei dem erfindungsgemäßen Verfahren vorgesehenen Schalttemperaturschwellen können gemäß einem Algorithmus im Steuergerät abgelegt sein, der bevorzugt so ausgelegt ist, daß er herrschenden Sicherheitsbestimmungen, gesetzlichen Vorschriften und einer optimalen Ausnutzung temperaturabhängiger Materialeigenschaften der Bestandteile des Heizgeräts Rechnung trägt.

In der Regel reicht ein proportionaler, linearer Zusammenhang zwischen Heizleistung und Schalttemperaturschwelle vollständig aus. Vorteilhafterweise ist in diesem Zusammenhang vorgesehen, eine Kennlinie zwischen Heizleistung und Schalttemperaturschwelle bereitzustellen, die zwischen zwei beispielsweise empirisch ermittelten Wertepaaren aus Heizleistung und Schalttemperatur einen proportionalen, linearen oder auch einen quadratischen (parabelförmigen) Verlauf hat.

Beispielsweise wird für ein Luftheizgeräte bei einer Heizleistung von 1kW eine Schalttemperaturschwelle von 180°C und bei einer Leistung von 5kW eine Schwelle von 240°C vorgesehen und die Zwischenwerte werden linear mittels einer Parabel (quadratischer Zusammenhang) interpoliert. Die Interpolation erfolgt nach der Gleichung: $T = a \times Q^2 + b \times Q + C$, wobei t die Temperatur in °C und Q die Heizleistung in kW bedeutet; a, b und c sind Faktoren, die die Form der Parabel bestimmen und z.B. durch statistische Auswertung von (empirischen) Messungen am Heizgerät ermittelt und dann im Berechnungsalgorithmus des Steuergerätes abgelegt werden. Die Zwischenwerte können aber auch linear interpoliert werden.

Vorteilhafterweise ist die Heizleistung in Gestalt einer Tabelle in einem Speicher des Steuergeräts abgelegt. Im Falle eines Heizgeräts, dessen Brenner durch eine Dosierpumpe mit Brennstoff versorgt wird, ist die Heizleistung mit einer im Speicher des Steuergeräts abgelegten Takttabelle der Dosierpumpe verknüpft.

Durch das Vorsehen einer jeweils an die Bedingungen des Heizgeräts angepaßten Verzögerungszeit für das Wirksamwerden einer Schaltschwelle wird insbesondere der Trägheit der Wärmeübertragertemperatur bei kurzfristigen Lastwechseln Rechnung getragen.

Würde nämlich beispielsweise bei einer reduzierten Heizleistungsanforderung gleichzeitig mit dem Herunterregeln der Leistung bereits eine neue Schaltschwelle wirksam, so könnte durch die Trägheit des Wärmeübertragers, der eine Masse von mehreren Kilogramm aufweist, dem Überhitzungssensor eine temporäre Überhitzung signalisiert werden, die jedoch an sich nur für einen statischen Betrieb in dieser Heizleistungsstufe tatsächlich eine Überhitzung darstellen würde.

Vorteilhafterweise ist die Verzögerungszeit von wenigstens einem im Steuergerät abgelegten Parameter beeinflußbar. Dies können beispielsweise für das Abregeln in eine niedrigere Leistungsstufe ($t_{0ab}$) und für das Hinaufregeln in eine höhere Heizleistungsstufe eine andere Grundverzögerungszeit ($t_{0auf}$) sowie eine Konstante K sein.

Vorteilhaft ist es ferner, wenn die Verzögerungszeit wenigstens einer weiteren Verzögerungszeit folgt, mit der eines der Aggregate, wie beispielsweise das Brennluftgebläse oder die Brennstoffdosierpumpe auf eine Ansteuerung einer geänderten Heizleistung reagiert. Derartige Verzögerungszeiten sind häufig in den Steuerprogrammen des Heizgeräts ohnehin für eine angepaßte Leistungsregelung vorgesehen, sodaß sich die Verzögerungszeit fiir das Wirksamwerden der neuen Schaltschwelle sinnvollerweise an diese anhängt. Dabei hat es sich als vorteilhaft erwiesen, wenn sich an eine Ansteuerungsanforderung für eine geänderte Heizleistung zunächst mit einer Verzögerung eine geänderte Heizleistungsstufe der Brennstoffdosierpumpe anschließt, worauf sich an diese wiederum eine geänderte Heizleistungsstufe des Brennluftgebläses mit einer weiteren Verzögerung anschließt. Dabei ist es vorteilhaft, wenn bei einer Unterteilung der Heizleistung in Heizleistungsstufen von etwa 0,1 kW die Verzögerungszeit für die Brennstoffdosierpumpenleistung etwa 1 s je geänderter Heizleistungsstufe beträgt.

Die daran anschließende Verzögerungszeit des Brennluftgebläses beträgt vorzugsweise etwa 5 s. Besonders vorteilhaft ist es, wenn die Verzögerungszeit bei einer verringerten Heizleistungsanforderung der Formel $t_{ab} = t_{0ab} / (HST\_BM + K)$ folgt, wobei $t_{ab}$ und K geräteund/oder anwendungsspezifische Faktoren darstellen, die im Steuergerät als Parameter abgelegt sind und wobei HST_BM der Heizleistungsstufe des Brennluftgebläses entspricht. Ebenso ist es vorteilhaft, wenn die Verzögerungszeit ($t_{auf}$) bei einer erhöhten Heizleistungsanforderung der Formel $t_{auf} = t_{0auf} / (HST\_BM + K)$ folgt, wobei $t_{0auf}$ und K geräte- und/oder anwendungsspezifische Faktoren darstellen, die im Steuergerät als Parameter abgelegt sind. Die genannten Parameter sorgen in Verbindung mit der 1/X-Funktion dafür, daß die Verzögerungszeit den Wärmeflußverhältnissen bei den unterschiedlichsten Heizleistungen optimal angepaßt wird. Der Faktor K bewirkt dabei eine Verflachung der 1/X-Funktion. Nach einer derart berechneten Verzögerungszeit wird die Schaltschwelle des Temperaturbegrenzers (=Überhitzungssensors) HST_TB um eine Heizleistungsstufe nach unten bzw. nach oben korrigiert und gleichzeitig eine neue Berechnung unter Berücksichtigung der dann aktuellen Heizleistung durchgeführt.

Mittels der Verzögerung wird gewährleistet, daß der jeweils aktuelle Überhitzungsschwellwert den möglichen Heizleistungsänderungen so nachläuft, daß keines der kritischen Bauteile seine zulässigen Temperaturen überschreitet, die Bauteile andererseits jedoch nahe ihrer jeweils zulässigen Belastungsgrenze belastet werden.

Nachfolgend ist ein Ausführungsbeispiel der Erfindung anhand der Zeichnungen beschrieben. Es zeigt:

Fig. 1    einen schematischen Längsschnitt durch ein als Luftheizgerät ausgebildetes Fahrzeug-Heizgerät,

Fig. 2    ein Diagramm mit einer statischen Überhitzungsschwelle,

Fig. 3    ein Diagramm zur Darstellung der unterschiedlichen Trägheiten bei einem Abregelvorgang,

Fig. 4    ein Diagramm zur Darstellung der unterschiedlichen Trägheiten bei einem Ab- und Aufregelvorgang und

Fig. 5    ein Flußdiagramm für ein erfindungsgemäßes Verfahren.

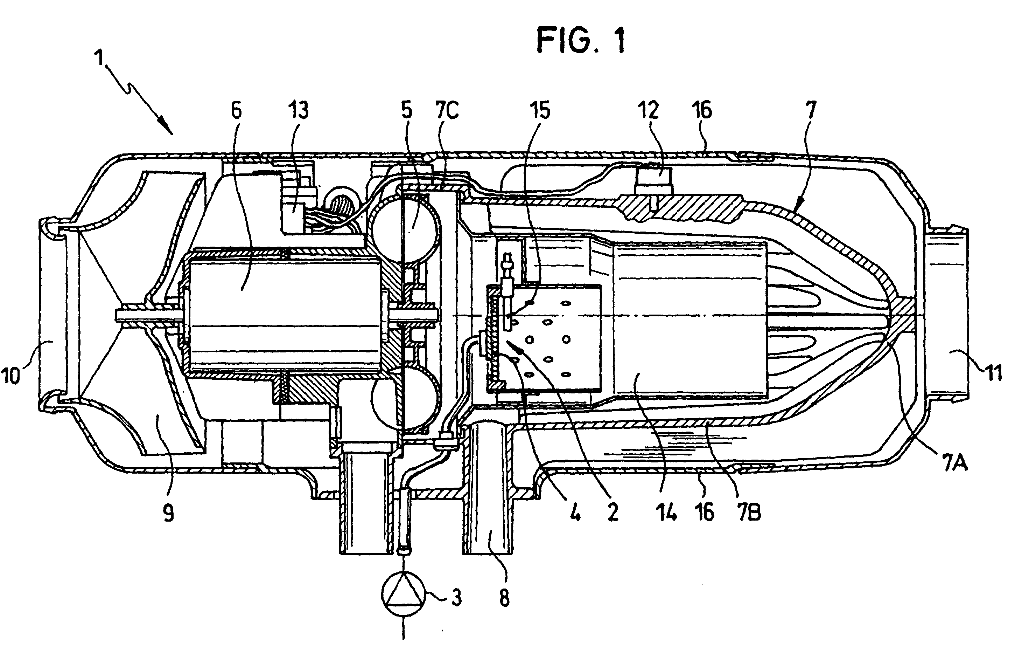

Das in Fig. 1 dargestellte Heizgerät 1 ist als Luftheizgerät für ein Fahrzeug ausgebildet. Einem Brenner 2 wird mittels einer Brennstoffdosierpumpe 3 flüssiger Brennstoff zugeführt, der in einen saugfähigen Körper 4 geführt wird und dort verdampft. Mittels eines Brennluftgebläses 5, das über einen elektrischen Motor 6 betrieben wird, wird dem Brenner 2 Brennluft zugeführt, die sich mit dem verdampften Brennstoff aus dem saugfähigen Körper 4 vermischt, mittels einer Zündeinrichtung 15 gezündet wird und in einer Brennkammer 14 verbrennt. Die nach vorne aus der Brennkammer 14 austretenden heißen Brenngase treffen auf einen insgesamt mit 7 bezeichneten Wärmetauscher, werden dort umgelenkt und anschließend über einen Abgasstutzen 8 ins Freie geleitet. Der Wärmetauscher 7 setzt sich aus einem Boden 7A, einem Mittelteil 7B und einem Flansch 7C zusammen, welcher im Bereich des Abgasstutzens 8 beginnt.

Während bei einer hohen Heizleistung der Boden 7A des Wärmetauschers 7 am stärksten thermisch beansprucht ist, verlagert sich die Zone der stärksten Beanspruchung bei einer mittleren Heizleistung auf die Gehäuseschalen 16 und bei einer relativ kleinen Heizleistung über den Flanschbereich 7C auf das daran anschließende Brennluftgeblase 5.

Die von den heißen Brenngasen mittels des Wärmetauschers 7 aufgenommene Wärme wird durch diesen über seine Außenseite an Heizluft als Heizmedium abgegeben, welche mittels eines Heizluftgebläses 9 von einer stirnseitigen Lufteintrittsöffnung 10 zu einer an dessen gegenüberliegenden Stirnseite angeordneten Luftaustrittsöffnung 11 gefördert wird. Zur Erhöhung der Wärmeübertragerleistung sind dabei am Wärmetauscher 7 in an sich bekannter Weise Rippen an der Außen- und Innenseite angeordnet.

Das Heizluftgebläse 9 wird im Ausführungsbeispiel vom gleichen Motor 6 wie das Brennluftgebläse 5 angetrieben; es kann jedoch auch ein separater Motor für beide Gebläse vorgesehen sein.

Zur Vermeidung einer Überhitzung von Bauteilen des Heizgeräts 1 ist ein Überhitzungssensor 12 vorgesehen, welcher an der Außenseite des Wärmetauschers 7 in dessen Mittelteil 7B angeordnet ist. Die Anordnung des Überhitzungssensors ist dabei so gewählt, daß dieser die verschieden belasteten Zonen 7A bzw. Bauteile 5, 16 für die verschiedenen Lastfälle optimal schützt. Der Überhitzungssensor 12 ist mittels einer nicht näher bezeichneten Signalleitung mit einem Steuergerät 13 verbunden, welches im Bereich des Motors 6, gekühlt durch die in diesem Bereich noch kalte Heizluft, angeordnet ist und alle Grundfunktionen des Heizgeräts 1, wie Motor 6, Brennstoffdosierpumpe 3, Zündeinrichtung 15, Flammüberwachung oder Überhitzungssensor 12 steuert.

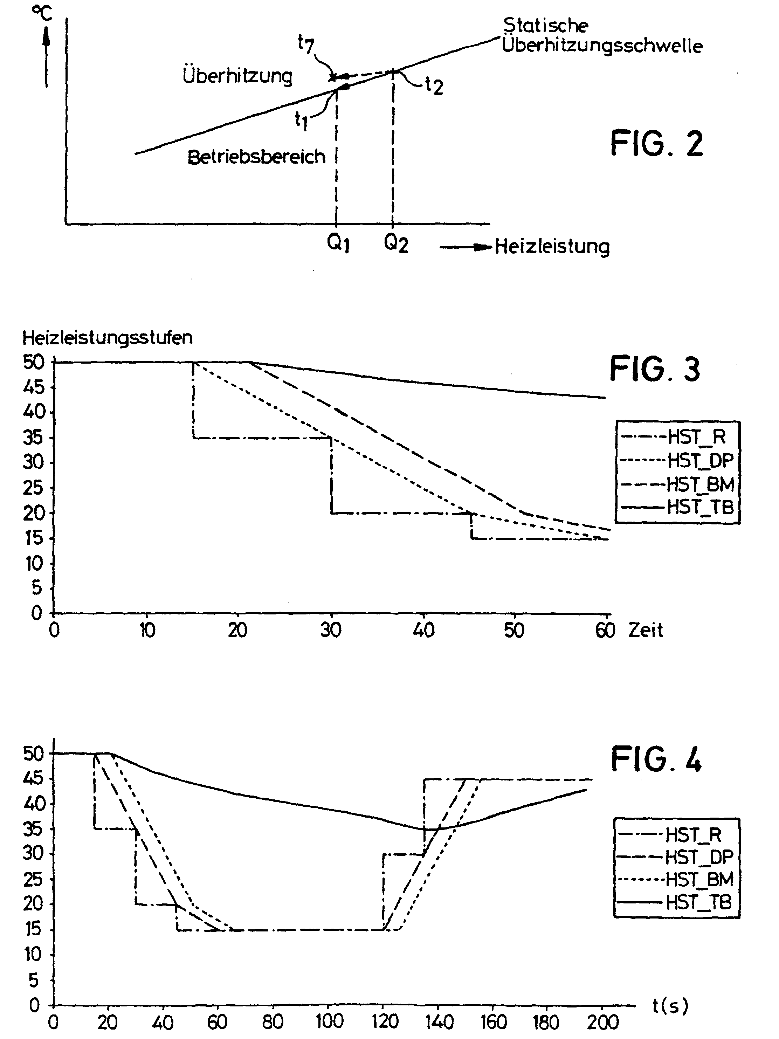

In Fig. 2 ist die aus dem Hauptpatent bekannte Überhitzungsschwelle graphisch dargestellt, bei der für eine bestimmte Heizleistung ein jeweils charakteristischer Schalt-Schwellwert am Überhitzungssensor 12 im Steuergerät 13 abgelegt ist. Eine derartige statische Überhitzungsschwelle ist nur bei einem längeren stationären Betrieb in den einzelnen Heizleistungsstufen sinnvoll. Bei einem dynamischen Betrieb mit häufigen Lastwechseln würde die Trägheit, insbesondere des Wärmetauschers 7, dazu führen, daß bei einem Abregelvorgang aus einer höheren Heizleistung $Q_2$ zu einer kleineren Heizleistung $Q_1$ die zugehörige Temperaturschwelle von dem Wert $t_2$ auf den Wert $t_1$ abgesenkt würde, während sich die Temperatur des Wärmetauschers $t_7$ aufgrund der Trägheit des mehrere Kilogramm schweren Wärmetauschers erst viel langsamer reduziert, wodurch dem Heizgerät eine temporäre Überhitzung signalisiert würde, die zu einer Unterbrechung des Heizgeräts führen würde.

In der Fig. 3 ist ein Abregelvorgang bei dem Luftheizgerät gemäß Fig. 1 dargestellt, wobei auf die Y-Achse die Heizleistung des Heizgeräts 1 von beispielsweise 5 kW in 50 Heizleistungsstufen von je 0,1 kW aufgeteilt ist. In den ersten 15 Sekunden wird im Beispiel gemäß Fig. 3 das Heizgerät 1 mit der höchstmöglichen Leistungsstufe 50 betrieben. Aufgrund geänderter Temperaturanforderungen, die beispielsweise von einem Innenraumtemperatursensor signalisiert werden können, wird zum Zeitpunkt 15 s die Leistungsanforderung an das Heizgerät von der Heizleistungsstufe 50 auf die Heizleistungsstufe 35 reduziert. Diese für die Regelung maßgebliche Anforderung der Heizleistungsstufe ist im Diagramm strichpunktiert gekennzeichnet und mit HST_R bezeichnet. Die Anpassung der Brennstoffdosierpumpe 3 an die geänderte Heizleistungsanforderung HST_R erfolgt mit einer Verzögerungszeit von einer Sekunde je Heizleistungsstufe; sie ist im Diagramm mit HST_DP bezeichnet und in einer feingestrichelten Linie ausgeführt. Dies führt im gezeigten Beispiel dazu, daß zum Zeitpunkt t = 30 s die Heizleistungsstufe HST_DP der Brennstoffdosierpumpe sich an die reduzierte angeforderte Heizleistungsstufe HST_R = 30 wieder angeglichen hat. Der Heizleistungsstufe HST_DP der Brennstoffdosierpumpe 3 folgt eine Heizleistungsstufe HST_BM des Brennluftgebläses 5 mit einer konstanten Verzögerung von 5 s. Diese ist im Diagramm mit einer breiter strichlierten Linie gezeigt.

Die am Überhitzungssensor 12 wirksame Schaltschwelle ist mit HST_TB bezeichnet und in einer durchgezogenen Linie dargestellt. Beim Abregelvorgang folgt sie der Formel $t_{ab} = t_{0ab}/(HST\_BM + K)$, wobei $t_{0ab}$ und K geräte- und/oder anwendungsspezifische Faktoren darstellen, die im Steuergerät 13 als Parameter abgelegt sind. Die Verzögerungszeit für das Wirksamwerden einer neuen Schaltschwelle $t_{ab}$ wird somit bestimmt von dem Verhältnis aus einer konstanten Verzögerungszeit $t_{0ab}$ und der Summe aus der jeweiligen Heizleistungsstufe HST_BM des Brennluftgebläses 5 und einer Konstanten K, der sich aufgrund empirischer Versuche vorteilhaft der Wert 1 zuordnen läßt. Das Wirksamwerden der neuen Schaltschwelle HST_TB erfolgt somit beim Abregeln aus der höchsten Heizleistungsstufe mit einer relativ großen Trägheit, die der Trägheit des Wärmetauschers 7 beim Abkühlen auf dem Weg zu einer kleineren Heizleistungsstufe angepaßt ist. Bei Abregelungsvorgängen aus anderen Heizleistungsstufen nimmt die Kurve HST_TB einen anderen Verlauf, die der dabei auftretenden Trägheit der Bauteile Rechnung trägt.

In Fig. 4 entspricht der linke Teil des Diagramms dem in Fig. 3 dargestellten Abregelungsvorgang. Im rechten Teil, beginnend mit der Sekunde 120, ist ein Aufregelvorgang zu zwei höheren Heizleistungsstufen dargestellt, wobei ausgehend von der Heizleistungsstufe 15 (entsprechend 1,5 kW) zunächst auf die Heizleistungsstufe 30 und nach weiteren 15 Sekunden ein Hinaufregeln auf die Heizleistungsstufe 45 erfolgt. Dabei folgt die Heizleistungsstufe HST_DP der Brennstoffdosierpumpe 3 der geänderten Heizleistungsanforderung HST_R mit einer Verzögerung von einer Sekunde je 0,1 kW, sodaß sie sich nach 135 Sekunden an die Heizleistungsstufe 30 und bei Sekunde 150 an die Heizleistungsstufe 145 angepaßt hat. Die Heizleistungsstufe HST_BM des Brennluftgebläses 5 folgt der Heizleistungsstufe HST_DP der Brennstoffdosierpumpe 3 wiederum mit einer Verzögerung von linear 5 Sekunden.

Die Heizleistungsstufe HST_TB für das Wirksamwerden einer neuen Schaltschwelle am Überhitzungssensor 12 wird nach einer Verzögerungszeit $t_{auf}$ wirksam, die sich aus der Formel $t_{auf} = t_{0auf} / (HST\_BM + K)$ ergibt, wobei $t_{0auf}$ und K wiederum geräte- und/oder anwendungsspezifische Faktoren darstellen, die im Steuergerät 13 als Parameter abgelegt sind. Wie aus der Fig. 4 zu ersehen, folgt die Heizleistungsstufe HST_TB des Temperaturbegrenzers bzw. Überhitzungssensors 12 dem Anstieg der Leistung der Brennstoffdosierpumpe 3 und des Brennluftgebläses wiederum mit einer angemessenen Verzögerung, die dem langsamen Temperaturanstieg des Wärmeübertragers 7 aufgrund der höheren Heizleistung Rechnung trägt. Nach Ablauf der berechneten Verzögerungszeit $t_{ab}$ bzw. $t_{auf}$ wird die Heizleistungsstufe HST_TB des Überhitzungssensors 12 jeweils um eine Stufe abgesenkt bzw. angehoben.

Die vorstehend wiedergegebenen Zahlenwertgleichungen zur Berechnung der Verzögerungszeiten $t_{ab}$ bzw. $t_{auf}$ haben sich aufgrund langwieriger Versuchsreihen als am besten geeignet erwiesen, den unterschiedlichen Trägheiten unterschiedlicher Heizgeräte bei unterschiedlichen Heizleistungsstufen optimal Rechnung zu tragen, sodaß zum einen eine hohe Sicherheit des Heizgeräts gegen eine tatsächliche Überhitzung gewährleistet ist und zum anderen eine optimale Ausnutzung der Bauteiltemperaturen garantiert werden kann. Eine unnötige Abschaltung des Heizgeräts 1 aufgrund eines "falschen" Temperatursignals des Überhitzungssensors ist bei einer richtigen Wahl der Parameter nahezu ausgeschlossen.

Die Parameter für die Grundzeiten $t_{0ab}$ bzw. $t_{0auf}$ und den Faktor K werden vorteilhaft im Wege der End-of-Line-Programmierung (EOL) beim Heizgerätehersteller, bei einem Endkunden oder einer Einbauwerkstatt gemäß den spezifischen Anforderungen des Heizgeräts in das Steuergerät 13 einprogrammiert. Der Faktor K bewirkt dabei eine Verflachung der 1/X-Funktion, wodurch die Verzögerungszeit den Wärmeflußverhältnissen bei den unterschiedlichen Heizleistungen angepaßt wird.

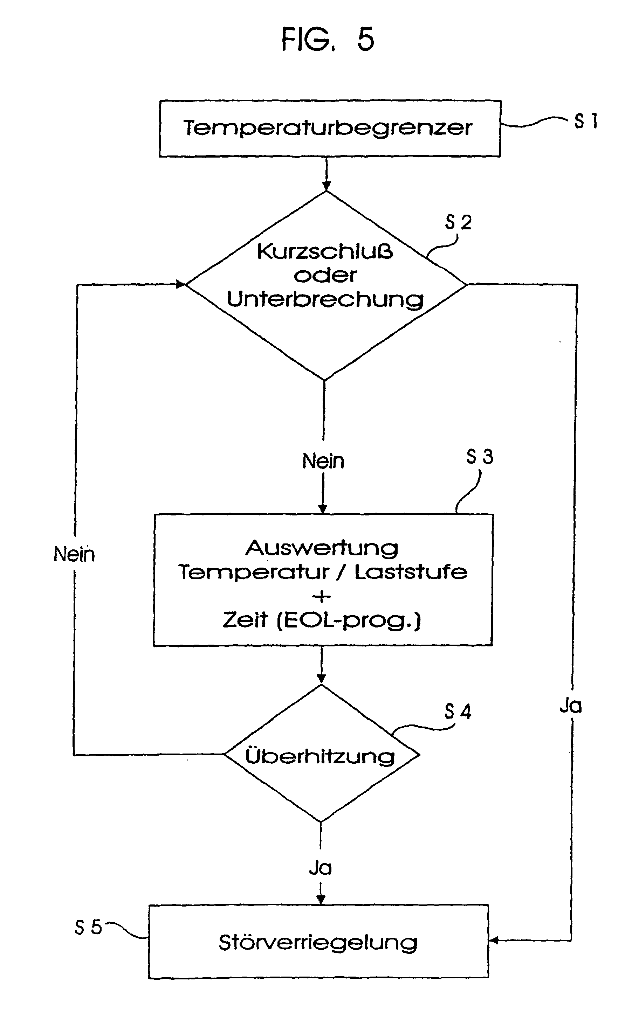

In Fig. 5 wird im Schritt S1 in ein Steuergerät 13 eines Heizgeräts, wie etwa eines Fahrzeug-Zusatzheizgeräts, der aktuelle Meßwert eines als Überhitzungsschutzsensor 12 dienenden analogen Sensors, der mit PTC- oder NTC-Charakteristik ausgelegt sein kann, eingelesen. Der Sensor 12 ist in an sich bekannter Weise an der Oberfläche des Heizgeräts, beispielsweise wie in der DE 38 39 244 C2 an der Außenwand des Wärmetauschers angebracht. Im Schritt S2 beurteilt das Steuergerät 13 gemäß einer in ihm abgelegten Routine, ob ein Kurzschluß oder eine Unterbrechung des Sensors 12 zum Einlesezeitpunkt vorliegt. Dadurch wird sichergestellt, daß der Überhitzungsschutzsensor 12 einen plausiblen Wert innerhalb eines zulässigen Wertebereichs liefert. Diese Überprüfung ist eine Voraussetzung für die Anwendung des erfindungsgemäßen Verfahrens, denn nur ein Sensor, der in Ordnung ist, kann vernünftige Werte für die Überwachung des Betriebs des Heizgeräts liefern.

Falls dies nicht der Fall ist, schreitet der Prozeß zum Schritt S5 weiter, in welchem das Steuergerät eine Abschaltung und eine Störverriegelung des Heizgeräts vornimmt und gegebenenfalls eine Störmeldung absetzt.

Aus einer Störverriegelung kann das Heizgerät nur durch ein bewußtes Eingreifen des Benutzers oder einer Fachwerkstatt - beispielsweise Reset durch kurzzeitiges Entfernen der Hauptsicherung des Heizgeräts - wieder in die Betriebsbereitschaft überführt werden. Falls im Schritt S2 weder ein Kurzschluß noch eine Fehlfunktion des Sensors 12 ermittelt werden, schreitet der Prozeß zum Schritt S3 weiter, in welchem die gemessene Temperatur des Sensors 12 mit der aktuellen Heizleistung des Steuergeräts und gegebenenfalls auch mit einer Zeitverzögerung verknüpft wird. Im Schritt S3 wird der aktuelle Wert der Temperatur oder Temperatur-Differenz oder eines Temperaturgradienten, der vom Sensor 12 geliefert wird, der aktuellen Heizleistung, die beispielsweise aus der Taktfrequenz der Brennstoff-Dosierpumpe 3 ermittelt wird, und einem dazugehörigen Schwellenwert zugeordnet.

Daraufhin schreitet der Prozeß zum Schritt S4 weiter, in welchem anhand eines Schwellen-Temperaturwerts bzw. einer Schwellen-Temperatur-Differenz oder einem Schwellen-Temperatur-Gradienten, der in einer entsprechenden Tabelle in einem Speicher des Steuergeräts abgelegt ist und der aktuellen Laststufe entspricht, ermittelt wird, ob die vom Sensor gemessene Temperatur den Schwellenwert überschreitet oder nicht, mit anderen Worten, ob eine Überhitzung vorliegt, oder nicht. Falls die Temperatur den Schwellenwert überschreitet, geht der Prozeß zum Schritt S5 der Störverriegelung weiter. Im Fall, daß der Schwellenwert nicht erreicht ist, springt der Prozeß zum Schritt S2 zurück.

Eine Verzögerungszeit bis zum Durchlaufen des nächsten mit S2 beginnenden Zyklus kann im Steuergerät beispielsweise in Form einer End-of-Line-Programmierung (EOL) zusätzlich zu den Schaltschwellen und den für bestimmte Heizleistungen charakteristischen Parametern abgespeichert werden. Dabei werden auch unterschiedliche Zeiten fiir das Ab- bzw. Hochregeln verwendet, wie dies vorstehend im Zusammenhang mit den Fig. 2 bis 4 bereits erläutert wurde.

**Patentansprüche**

1. Verfahren zum Steuern eines Überhitzungsschutzes für ein Heizgerät (1), insbesondere ein Fahrzeug-Zusatzheizgerät, bei dem zumindest ein Überhitzungssensor (12) die Temperatur oder eine Temeratur-Differenz oder einen Temperatur-Gradienten des Heizgeräts mißt und ein dieser Temperatur oder Temperatur-Differenz oder diesem Temperatur-Gradienten entsprechendes Signal an ein Steuergerät (13) geleitet wird, in welchem die gemessene Temperatur bzw. Temperatur-Differenz oder der TemperaturGradient mit wenigstens einer Schaltschwelle verglichen wird, die im Steuergerät (13) abgelegt ist, und das Steuergerät (13) dem Betrieb des Heizgeräts (1) unterbricht wenn die gemessene Temperatur bzw. Termperatur-Differenz oder dieser TemperaturGradient die Schaltschwelle überschreitet, **dadurch gekennzeichnet, daß** das Steuergerät entsprechend einer momentan gefahrenen Heizleistung (HST_R) des Heizgeräts einen Vergleich mit einer für diese Heizleistung typischen Schaltschwelle (HST_TB) durchführt, von denen mehrere in einem Speicher des Steuergeräts abgelegt sind oder auf der Grundlage wenigstens eines für die jeweilige Heizleistung typischen Parameters durch das Steuergerät berechnet werden.

2. Verfahren nach Anspruch 1, **dadurch gekennzeichnet, daß** die Schaltschwellen (HST_TB) auf Grundlage von zwei unterschiedlichen vorgegebenen Wertepaaren Temperatur bzw. Temperatur-Differenz bzw. Temperatur-Gradient/Heizleistung durch Festlegen einer diese beiden Wertepaare verbindenden Kennlinie definiert sind.

3. Verfahren nach Anspruch 2, **dadurch gekennzeichnet, daß** die Kennlinie durch eine proportionale, lineare Abhängigkeit zwischen den beiden Wertepaaren festgelegt ist.

4. Verfahren nach einem der Ansprüche 1 bis 3, wobei das Heizgerät ein brennstoffbetriebenes Heizgerät ist, dessen Brenner durch eine Dosierpumpe mit Brennstoff versorgt wird, **dadurch gekennzeichnet, daß** die Heizleistung mit einer im Speicher des Steuergeräts abgelegten Takttabelle oder Frequenztabelle der Dosierpumpe verknüpft ist.

5. Verfahren nach einem der vorhergehenden Ansprüche, wobei zwischen dem Abgleich mit den Schaltschwellen Verzögerungszeiten ($t_{ab}$; $t_{auf}$) liegen, die in Abhängigkeit vom jeweiligen Betriebszustand aus einem Speicher des Steuergerätes (13) auslesbar sind.

6. Verfahren nach Anspruch 5, **dadurch gekennzeichnet, daß** die Verzögerungszeit ($t_{ab}$; $t_{auf}$) von wenigstens einem im Steuergerät (13) abgelegten Parameter ($t_{0ab}$, $t_{0auf}$, K) beeinflussbar ist.

7. Verfahren nach Anspruch 5 oder 6, **dadurch ge-**

**kennzeichnet, daß** die Verzögerungszeit ($t_{ab}$; $t_{auf}$) wenigstens einer weiteren Verzögerungszeit folgt, mit der eines der Aggregate (Brennluftgebläse 5, Brennstoffdosierpumpe 3) des Heizgeräts (1) auf eine Ansteuerung einer geänderten Heizleistung (HST_R) reagiert.

8. Verfahren nach Anspruch 7, **dadurch gekennzeichnet, daß** sich an eine Ansteuerungsanforderung für eine geänderte Heizleistung (HST_R) zunächst mit einer Verzögerung eine geänderte Heizleistungsstufe (HST_DP) der Brennstoffdosierpumpe (3) anschließt.

9. Verfahren nach Anspruch 8, **dadurch gekennzeichnet, daß** sich an eine geänderte Heizleistungsstufe (HST_DP) der Brennstoffdosierpumpe (3) mit einer Verzögerung eine geänderte Heizleistungsstufe (HST_BM) des Brennluftgebläses (5) anschließt.

10. Verfahren nach einem der vorhergehenden Ansprüche, **dadurch gekennzeichnet, daß** bei einer Unterteilung der Heizleistung des Heizgeräts (1) in Heizleistungsstufen von etwa 0,1 kW die Verzögerungszeit ($t_{ab}$; $t_{auf}$) größer ist als 1 s je geänderter Heizleistungsstufe (HST_R).

11. Verfahren nach Anspruch 10, **dadurch gekennzeichnet, daß** die Verzögerungszeit ($t_{ab}$; $t_{auf}$) zusätzlich um mindestens 5 s größer ist als die sich aus der Verzögerung von 1 s je geänderter Heizleistungsstufe (HAST_R) ergebende.

12. Verfahren nach einem der Ansprüche 6 bis 11, **dadurch gekennzeichnet, daß** die Verzögerungszeit (tab) bei einer verringerten Heizleistungsanforderung (HST_R) der Formel

$$t_{ab} = t_{0ab} / (HST\_BM + K)$$

folgt, wobei $t_{0ab}$ und K geräte- und/oder anwendungsspezifische Faktoren darstellen, die im Steuergerät (13) als Parameter abgelegt sind.

13. Verfahren nach einem der Ansprüche 6 bis 12, **dadurch gekennzeichnet, daß** die Verzögerungszeit ($t_{auf}$) bei einer erhöhten Heizleistungsanforderung (HST_R) der Formel

$$t_{auf} = t_{0auf} / (HST\_BM + K)$$

folgt, wobei $t_{0auf}$ und K geräte- und/oder anwendungsspezifische Faktoren darstellen, die im Steuergerät (13) als Parameter abgelegt sind.

**14.** Verfahren nach einem der Ansprüche 6 bis 13, **dadurch gekennzeichnet, daß** die für die Berechnung der Verzögerungszeit ($t_{ab}$; $t_{auf}$) maßgeblichen Parameter ($t_{0ab}$, $t_{0auf}$, K) im Wege der End-of-Line-Programmierung (EOL) im Steuergerät (13) abgelegt werden.

**Claims**

**1.** Method for controlling an overheating protection for a heater (1), in particular a motor-vehicle supplementary heater, in which at least one overheating sensor (12) measures the temperature or a temperature difference or a temperature gradient of the heater and a signal corresponding to this temperature or temperature difference or this temperature gradient is fed to a control unit (13), in which the measured temperature or temperature difference or the temperature gradient is compared with at least one switching threshold, which is stored in the control unit (13) and the control unit (13) interrupts the operation of the heater (1) when the measured temperature or temperature difference or this temperature gradient exceeds the switching threshold, **characterised in that**, according to a heating power (HST_R) of the heater, at which the heater is currently being operated, the control unit carries out a comparison with a switching threshold (HST_TB), which is typical for this heating power, of which several are stored in a memory of the control unit or are calculated by the control unit on the basis of at least one parameter typical for the current heating power.

**2.** Method according to Claim 1, **characterised in that** the switching thresholds (HST_TB) are defined on the basis of two different specified pairs of values of temperature or temperature difference or temperature gradient/heating power by defining a characteristic connecting these two pairs of values.

**3.** Method according to Claim 2, **characterised in that** the characteristic is defined by a proportional, linear relationship between the two pairs of values.

**4.** Method according to one of Claims 1 to 3, the heater being a fuel-operated heater whose burner is supplied with fuel by a dosing pump, **characterised in that** the heating power is linked to a cycle table or frequency table of the dosing pump stored in the memory of the control unit.

**5.** Method according to one of the preceding claims, whereby delay times ($t_{down}$; $t_{up}$) , which, dependent upon the current operating condition, can be read from a memory in the control unit (13), lie between the comparison with the switching thresholds.

**6.** Method according to Claim 5, **characterised in that** the delay time ($t_{down}$; $t_{up}$) can be influenced by at least one parameter ($t_{0down}$, $t_{0up}$, K) stored in the control unit (13).

**7.** Method according to Claim 5 or 6, **characterised in that** the delay time ($t_{down}$; $t_{up}$) follows at least one further delay time, with which one of the items of equipment (combustion air fan 5, fuel dosing pump 3) of the heater (1) responds to an impetus of a changed heating power (HST_R).

**8.** Method according to Claim 7, **characterised in that** a control demand for a changed heating power (HST_R) is first followed with a delay by a changed heating power step (HST_DP) of the fuel dosing pump (3).

**9.** Method according to Claim 8, **characterised in that** a changed heating power step (HST_DP) of the fuel dosing pump (3) is followed with a delay by a changed heating power step (HST_BM) of the combustion air fan (5).

**10.** Method according to one of the preceding claims, **characterised in that** when the heating power of the heater (1) is subdivided into heating power steps of about 0.1 kW, the delay time ($t_{down}$; $t_{up}$) is greater than 1 s for each changed heating power step (HST_R).

**11.** Method according to Claim 10, **characterised in that** the delay time ($t_{down}$; $t_{up}$) is additionally at least 5 s greater than that resulting from the delay of 1 s for each changed heating power step (HAST_R) [sic].

**12.** Method according to one of Claims 6 to 11, characrerised in that the delay time ($t_{down}$) in the case of a reduced heating power requirement (HST_R) follows the formula

$$t_{down} = t_{0down} / (HST\_BM + K)$$

where $t_{0down}$ and K represent factors specific to the device and/or application, which are stored as parameters in the control unit (13).

**13.** Method according to one of Claims 6 to 12, **characterised in that** the delay time ($t_{up}$) in the case of an increased heating power requirement (HST_R) follows the formula

$$t_{up} = t_{0up}/(HST\_BM + K)$$

where $t_{0up}$ and K represent factors specific to the device and/or application, which are stored as parameters in the control unit (13).

14. Method according to one of Claims 6 to 13, **characterised in that** parameters ($t_{0down}$, $t_{0up}$, K) important for the calculation of the delay time ($t_{down}$; $t_{up}$) are stored in the control unit (13) as part of the end-of-line programming (EOL).

**Revendications**

1. Procédé de commande de la protection de surchauffe pour un appareil de chauffage (1), en particulier un appareil de chauffage auxiliaire de véhicule, dans lequel au moins un capteur de surchauffe (12) mesure la température ou une différence de température ou un gradient de température de l'appareil de chauffage et un signal correspondant à cette température ou différence de température ou gradient de température est envoyé à un appareil de commande (13) dans lequel la température, la différence de température ou le gradient de température mesuré(e) est comparé(e) avec au moins un seuil de commutation enregistré dans l'appareil de commande (13), et l'appareil de commande (13) interrompt le fonctionnement de l'appareil de chauffage (1) lorsque la température, la différence de température ou le gradient de température mesuré (e) dépasse le seuil de commutation, **caractérisé par le fait que** l'appareil de commande effectue en fonction d'une puissance de chauffage momentanée (HST_R) de l'appareil de chauffage une comparaison avec un seuil de commutation typique de cette puissance de chauffage (HST_TB), dont plusieurs sont enregistrés dans une mémoire de l'appareil de commande ou calculés par l'appareil de commande sur la base d'au moins un paramètre typique de la puissance de chauffage considérée.

2. Procédé selon la revendication 1, **caractérisé par le fait que** les seuils de commutation (HST_TB) sont définis sur la base de deux paires de valeurs différentes prédéfinies de température, différence de température ou gradient de température/puissance de chauffage par détermination d'une courbe caractéristique reliant une de ces deux paires de valeurs.

3. Procédé selon la revendication 2, **caractérisé par le fait que** la courbe caractéristique est définie par une dépendance proportionnelle linéaire entre les deux paires de valeurs.

4. Procédé selon l'une des revendications 1 à 3, dans lequel l'appareil de chauffage est un appareil de chauffage fonctionnant au combustible, dont le brûleur est alimenté en combustible par une pompe de dosage, **caractérisé par le fait que** la puissance de chauffage est liée à une table de cycles ou de fréquences de la pompe de dosage enregistrée dans la mémoire de l'appareil de commande.

5. Procédé selon l'une des revendications précédentes, dans lequel sont prévus avant l'alignement sur les seuils de commutation des temps de retard ($t_{ab}$; $t_{auf}$) qui sont lisibles depuis une mémoire de l'appareil de commande (13) en fonction de l'état de fonctionnement respectif.

6. Procédé selon la revendication 5, **caractérié par le fait** que le temps de retard ($t_{ab}$; $t_{auf}$) peut être influencé par au moins un paramètre ($t_{0ab}$, $t_{0auf}$, K) enregistré dans l'appareil de commande (13).

7. Procédé selon la revendication 5 ou 6, **caractérisé par le fait que** le temps de retard ($t_{ab}$ ; $t_{auf}$) suit au moins un autre temps de retard avec lequel l'un des sous-ensembles (soufflerie d'air de combustion 5, pompe de dosage de combustible 3) de l'appareil de chauffage (1) réagit à une demande de changement de la puissance de chauffage (HST_R).

8. Procédé selon la revendication 7, **caractérisé par le fait qu'**une demande de changement de la puissance de chauffage (HST_R) est d'abord suivie avec un retard d'un changement de palier de puissance de chauffage (HST_DP) de la pompe de dosage de combustible (3).

9. Procédé selon la revendication 8, **caractérisé par le fait qu'**un changement de palier de puissance de chauffage (HST_DP) de la pompe de dosage de combustible (3) est suivi avec un retard d'un changement de palier de puissance de chauffage (HST_BM) de la soufflerie d'air de combustion (5).

10. Procédé selon l'une des revendications précédentes, **caractérisé par le fait qu'**en cas de subdivision de la puissance de chauffage de l'appareil de chauffage (1) en paliers de puissance de chauffage d'environ 0,1 kW, le temps de retard ($t_{ab}$; $t_{auf}$) est supérieur à 1 s par changement de palier de puissance de chauffage (HST_R).

11. Procédé selon la revendication 10, **caractérisé par le fait que** le temps de retard ($t_{ab}$; $t_{auf}$) est de plus supérieur d'au moins 5 s à celui résultant du retard de 1 s par changement de palier de puissance de chauffage (HST_R).

12. Procédé selon l'une des revendications 6 à 11, **caractérisé par le fait que** le temps de retard ($t_{ab}$) dans le cas d'une demande de diminution de la puissance de chauffage (HST_R) suit la formule

$$t_{ab} = t_{0ab} / (HST\_BM + K)$$

dans laquelle $t_{0ab}$ et K représentent des facteurs spécifiques à l'appareil et/ou à l'application qui sont enregistrés comme paramètres dans l'appareil de commande (13).

13. Procédé selon l'une des revendications 6 à 12, **caractérisé par le fait que** le temps de retard ($t_{auf}$) dans le cas d'une demande d'augmentation de puissance de chauffage (HST_R) suit la formule

$$t_{auf} = t_{0auf} / (HST\_BM + K)$$

dans laquelle $t_{0auf}$ et K représentent des facteurs spécifiques à l'appareil et/ou à l'application qui sont enregistrés comme paramètres dans l'appareil de commande (13).

14. Procédé selon l'une des revendications 6 à 13, **caractérisé par le fait que** les paramètres déterminants ($t_{0ab}$, $t_{0auf}$, K) pour le calcul du temps de retard ($t_{ab}$; $t_{auf}$) sont enregistrés dans l'appareil de commande (13) sous la forme d'une programmation End-of-Line (EOL).

FIG. 1

°C

t7

Überhitzung

Statische
Überhitzungsschwelle

t2

t1

FIG. 2

Betriebsbereich

Q1    Q2    Heizleistung

Heizleistungsstufen

FIG. 3

HST_R
HST_DP
HST_BM
HST_TB

0    10    20    30    40    50    60    Zeit

FIG. 4

HST_R
HST_DP
HST_BM
HST_TB

0    20    40    60    80    100    120    140    160    180    200    t(s)

# FIG. 5